Europäisches Patentamt

European Patent Office

Office européen des brevets

(11) Publication number: **0 293 194 B1**

# EUROPEAN PATENT SPECIFICATION

(45) Date of publication of patent specification: **05.08.92** (51) Int. Cl.⁵: **A23D 9/00, A23G 1/00**

(21) Application number: **88304762.3**

(22) Date of filing: **26.05.88**

(54) Fat for chocolate.

(30) Priority: **27.05.87 GB 8712465**

(43) Date of publication of application:
**30.11.88 Bulletin 88/48**

(45) Publication of the grant of the patent:
**05.08.92 Bulletin 92/32**

(84) Designated Contracting States:
**AT BE CH DE ES FR GB GR IT LI NL**

(56) References cited:
EP-A- 0 130 487
CH-A- 519 858
DE-A- 2 747 765
GB-A- 2 003 912
US-A- 3 851 083

PATENT ABSTRACTS OF JAPAN, vol. 8, no.
102 (C-222)[1539], 12th May 1984; & JP-A-59
17 949 (ASAHI DENKA KOGYO K.K.)
30-01-1984

(73) Proprietor: **UNILEVER PLC**
**Unilever House Blackfriars P.O. Box 68**
**London EC4P 4BO(GB)**

(84) Designated Contracting States:
**GB**

(73) Proprietor: **UNILEVER N.V.**
**Burgemeester s'Jacobplein 1 P.O. Box 760**
**NL-3000 DK Rotterdam(NL)**

(84) Designated Contracting States:
**BE CH DE ES FR GR IT LI NL AT**

(72) Inventor: **Pierce, John Hugh**
**24 Purbeck Road**
**Rushden Northants(GB)**
Inventor: **Talbot, Geoffrey**
**22 The Elms**
**Kempston Beds(GB)**

(74) Representative: **Dries, Antonius Johannes Ma-
ria et al**
**Unilever N.V. Patent Division P.O. Box 137**
**NL-3130 AC Vlaardingen(NL)**

Rank Xerox (UK) Business Services

## Description

This invention relates to edible fat suitable for use in the preparation of chocolate confectionery and in particular relates to such compositions containing an appreciable amount of glyceride oils, particularly vegetable oil the triglycerides of which are rich in polyunsaturated fatty acids.

Chocolate confectionery is rich in fat; approximately one-third of chocolate is fat and that fat is rich in saturated fatty acids. About two-thirds of cocoa butter itself is saturated fat and only 5% of the fatty acids are polyunsaturated i.e. containing 2 or more ethylenically unsaturated bonds. The many alternative fats proposed and used in chocolate confectionery are similarly highly saturated and contain little if any polyunsaturated fatty acids, for example lauric fats such as coconut oil and palm kernel oil and their stearin fractions, vegetable butters such as shea, sal, aceituno and kokum with similar triglyceride compositions to that of cocoa butter itself and the variety of hardened vegetable oils used as cocoa butter substitutes. Many soft, non-fondant confectionery fillings are also rich in fat and although less saturated than the fat used in chocolate, enrichment of the unsaturated fatty acid content would be desirable for dietary purposes. Consumers are becoming increasingly aware of the effect of diet upon health and more discriminating in regard to the composition of the food they eat and its effect on health. Reference may be made in this connection to the publication of the recommendations in the Report of the Committee on Medical Aspects of Food Policy in 1984 on diet in relation to cardiovascular disease, recommending an increase in the polyunsaturated fatty acid of the diet at the expense of the saturated fatty acid content, a PUFA:SAFA (polyunsaturated fatty acid:saturated fatty acid) ratio of at least 0.45 being recommended.

To make it acceptable, plain chocolate fat must have a melt-down in the mouth similar to that of cocoa butter - that is to say it must have a high solid fat content, exceeding 65% at 25°C and ideally nil solids content at 35°C, these requirements meaning that the fat must contain significant levels of saturated or trans fatty acid, in the case of fats consisting substantially of $C_{16}$ and $C_{18}$ fatty acid glycerides as in most vegetable fats. In the case of milk chocolate, solids content values of 30-40% at 25°C and nil at 35°C are acceptable. Again, the fat must not require the manufacturer to alter his processing conditions significantly, both with regard to temper and crystallisation times and temperatures in cooling tunnels.

The softening effect on chocolate compositions of added fats or glyceride oils may also be exercised by the introduction of other fats which exhibit different crystal polymorphism from cocoa butter, the stable form of which is in Beta form. Lauric fats provide a well-known example and butterfat, the higher melting fractions of which exhibit Beta prime polymorphism, exercise in consequence a substantial softening effect when incorporated in milk chocolate. In addition, the phenomenon of bloom which confers an unattractive appearance to chocolate, is attributable to incompatability of crystal habit of mixed fats, notably between lauric and non-lauric fats such as cocoa butter.

PRIOR ART:

A chocolate base comprising a blend of cocoa liquor, cocoa butter and soybean oil with defatted soy flour is described in Przemysl Spozywczy, 1971, 25 (7) 267-268. A mixture of cocoa butter and sunflower seed oil has also been studied, Izvestiya Vysshikh Uchebnykh Zavedenii, Pishchevaya Tekhnologiya, 1974 No. 3, 20-24 showing that the oil is a good solvent for the cocoa butter triglycerides and thus confirming that it is difficult to replace conventional chocolate fats by PUFA-rich fats.

In US patent 3133819 a confectionery fat is described consisting of a substantially saturated fat composition including lauric fat, which is preferably randomised and blended with a vegetable oil containing high amounts of linoleic acid. Lauric fats exhibit a high degree of incompatibility with other vegetable butters such as cocoa butter.

In Japanese patent specification 169295 a mixture of cocoa butter and oil and fat of melting point below 25°C is used in chocolates.

GB 827172 describes milk chocolate comprising milk refiner paste with additional fat, the milk refiner paste being composed of cocoa mass, sugar and dried full cream whole milk powder and the additional fat comprising upper fractions of palm oil.

GB 2003912 describes hard butter compositions of palm mid-fractions of specified slip melting point and clear point ranges, with a solid fraction of shea fat containing less than 80% by weight of combined StOSt and POSt, chocolate samples being prepared from them by blending with customary ingredients including whole milk powder.

DESCRIPTION OF THE INVENTION:

The present invention permits the introduction in fats, particularly confectionery fats based on cocoa butter, of a substantial amount of fats and glyceride oils normally exercising a substantial softening effect on chocolate compositions. Accordingly, the present invention provides a cocoa butter fat suitable for replacing at least part of the cocoa butter normally present in chocolate formulations, the fat comprising a blend of palm mid-fraction and a hard butter containing at least 50% StOSt and/or POSt, (P = palmitic acid, St = stearic acid, O = oleic acid), wherein the blend also comprises a proportion of a cocoa butter softening fat from which at least 40% of the total unsaturated fatty acid content in polyunsaturated fatty acid, whereas the ratio of palm mid fraction : hard fat is 1:4 to 4:1, and the fat composition displays a solid fat content (NMR-pulse stab.) of at least 35 at 20°C and at most 8 at 35°C. The invention also provides chocolate compositions comprising a blend of cocoa butter with a partial replacement fat comprising the above mentioned fat, comprising palm mid -fraction, a hard fat containing at least 50% StOSt and/or POSt and a cocoa butter softening fat, particularly a PUFA glyceride oil. Surprisingly, the softening fat exercises little effect on the hard fat, nor on blends with cocoa butter and may even improve temper requirements.

Softening fats comprise liquid glyceride oils, particularly those high in PUFA and with a high PUFA/SAFA (polyunsaturated fatty acid/saturated fatty acid) ratio, i.e. with at least 40% of the total unsaturated fatty acid content as polyunsaturated fatt acid. The softening fat may be included in the blend of replacement fat or incorporated in encapsulated form in the chocolate composition. Encapsulated fats may be prepared by drying an aqueous emulsion of the fat containing protein, preferably sodium caseinate and usually a sugar such as lactose, sucrose or maltodextrin. The emulsion may be drum-dried or spray-dried to an average particle size preferably not exceeding 25 microns. This is the size of particles prevailing in refined chocolate compositions, to which the replacement fat containing the dried particles are added, thus preserving the softening fat in encapsulated condition. In this condition the softening fat exercises no undue softening effect in comparison with its presence normally in blends with cocoa butter compositions. It is also organoleptically acceptable. The invention therefore provides a method of preparing chocolate composition in which after refining an encapsulated additive fat is added. In addition to liquid oils, the encapsulated fat may comprise any cocoa butter softening fat for example butterfat or a fraction thereof. Milk powder in which butter fat is encapsulated may be used. Other methods of encapsulation providing leak-proof containment may be used.

When encapsulation is applied, it is essential to avoid the presence of excessive moisture in the compositions of the product, since otherwise the encapsulating membrane is disrupted. It will be appreciated moreover that in any event the encapsulation enclosure must be substantially leak-proof. This may be tested by extracting the encapsulated fat with hexane or other fat solvent. If fat can be extracted from its encapsulation such materials are unsuitable for use in the invention.

The compositions of the present invention should exhibit a solids content at 20°C of at least 35, especially at least 60 and at 35°C of at most 8 or more preferably at most 5.

The amount of softening fat, as liquid glyceride oil in the cocoa butter replacement fat is preferably at least 4% and up to 50%, more particularly 10 to 30% by weight of the fat composition. Suitable vegetable oils include soybean, cottonseed, sunflower and corn oil. Preferably, sufficient PUFA oil is present to provide a PUFA SAFA ratio of at least 0.45 with the total fat content of confectionery which includes the compositions of the present invention.

Other suitable softening fats include butterfat and butterfat fractions particularly butterfat stearine, which are preferably in encapsulated form. Liquid glyceride oils eg. sunflower, safflower and groundnut oil may be present as softening oils providing highly unsaturated chocolate compositions. Softening fats may also be derived from animal and marine sources, including fish oils.

The proportions of the palm mid-fraction and hard fat comprising the remainder of the fat composition according to the invention, and are therefore between 1 to 4 and 4 to 1 parts by weight, more particularly from 2 to 3 to 3 to 2 parts by weight. The palm mid-fraction preferably comprises from 60 to 80% POP. The hard fat preferably contains at least 60% StOSt and/or POSt and exhibits a solids content at 30°C of at least 60 and preferably at least 70, all solids content measurements described in this specification being measured by the pulse NMR method. Suitable hard fats comprise shea, sal, kokum, aceituno, illipe and their fractions. The hard fat may be hydrogenated selectively to meet the above solid requirements. More preferably the StOSt/POSt content of the hard fat is at least 80%. In this specification S = Saturated Acid P = palmitic acid, St = stearic acid and O = oleic acid.

Preferably the total SSO content of the compositions according to the invention is at most 8%. A particularly preferred range of compositions comprises palm mid-fraction containing at least 75% SOS and at most 8% SSO, blended with shea stearin containing at least 85% SOS in proportions from 50:50 to 60:40, together with from 10 to 20% sunflower oil. Such compositions exhibit closely similar characteristics in respect of finger printing resistance, ease of demoulding and penetration measured by penetrometer after storage at 20°C, with a control composition consisting only of 65:35 parts of the mid-fraction with the shea stearin.

EXAMPLE I

A mid-fraction of palm oil was obtained by successive fractionation from acetone and exhibited a SOS:SSO ratio of 82:4 by weight and a total $S_2O$- content of 86%. Shea fat was also fractionated to recover a stearin fraction containing 85% SOS. Blends of the above palm and shea fat fractions were evaluated in the ratios 2:3, 1:1 and 3:2, with the addition of 2, 5, 10, and 20% sunflower oil for comparison with a control blend in which no sunflower oil was added and with Coberine, a proprietary cocoabutter replacement fat blend. Jensen cooling curve data and solids content values measured by Pulse NMR method were obtained for each sample, the latter values being obtained on samples stabilised in accordance with the method described by Petersen in Fette, Seifen Anstrichmittel (87),225 (1985)). The data obtained appear in Table I, from which it is apparent that, even at levels of 20% sunflower oil, Tmax values are obtained which meet acceptable requirements for compositions used as equivalents to cocoa butter, for the blends 2:3 and 1:1 palm:shea fraction blends and that indeed, from extrapolation of the data in Table I, up to approximately 40% sunflower could be accommodated with the former blend and approximately 30% with the latter. Further, up to approximately 12% sunflower oil can be accommodated with the 3:2 blend before the Tmax falls below 29°C. All the blends considered exhibited Tmin values above 24°C. Both Tmax and Tmin values decrease as the sunflower oil content increases, but the Jensen time depends more on the palm/shea fat ratio.

EP 0 293 194 B1

TABLE I

| Fat | | Sun% | Jensen Cooling Curve | | | NMR Values | |
|---|---|---|---|---|---|---|---|
| | | | Tmax | Tmin | Time | 20°C | 35°C |
| Coberine | | 0 | 29 | 24 | 65 | 64 | 8 |
| Palm/Shea | | | | | | | |
| | 2:3 | 0 | 33.0 | 26.4 | 47 | 83.9 | 27.5 |
| | | 2 | 32.7 | 26.6 | 50 | 83.4 | 28.2 |
| | | 5 | 32.8 | 26.2 | 48 | 79.4 | 27.2 |
| | | 10 | 32.2 | 26.1 | 48 | 73.0 | 21.4 |
| | | 20 | 31.0 | 25.2 | 49 | 61.0 | 12.6 |
| | 1:1 | 0 | 31.3 | 25.8 | 49 | 80.8 | 12.4 |
| | | 2 | 31.5 | 25.8 | 50 | 79.8 | 12.6 |
| | | 5 | 30.8 | 25.8 | 50 | 76.3 | 11.9 |
| | | 10 | 31.0 | 25.6 | 53 | 70.6 | 10.6 |
| | | 20 | 30.0 | 25.2 | 51 | 59.5 | 6.5 |
| | 3:2 | 0 | 29.6 | 25.6 | 54 | 80.0 | 2.4 |
| | | 2 | 29.6 | 25.2 | 57 | 78.6 | 2.1 |
| | | 5 | 29.4 | 24.8 | 56 | 75.4 | 1.7 |
| | | 10 | 29.2 | 24.9 | 56 | 69.5 | 1.6 |
| | | 20 | 28.1 | 24.1 | 58 | 58.4 | 2.1 |

The data in Table I indicates that all the blends above the ratio 1:1 palm:shea fats have a solids content at 35°C which are acceptable for fats used as equivalents to cocoa butter; all 3:2 blends exhibit sufficiently low solids content values at 35°C for this purpose within these limits. The solids content values at 20°C obtained for palm:shea blends with up to approximately 17% sunflower are all acceptable cocoa butter equivalent fats. In general, preferably a palm:shea ratio of approximately 11:9 is preferred for any level of sunflower oil up to 15%.

Chocolate formulations were prepared from a blend of the palm and shea fractions in the ratio of 59:41 blended with sunflower oil giving an overall ratio for these three components of 53:37:10, (Sample A) and with a 56:44 palm:shea blend giving an overall ratio of 48:37:15 palm:shea:sunflower oil (Sample B). Each sample of the replacement fat obtained was incorporated in a chocolate recipe as follows:-

| Cocoa Butter equivalent | 21.4% |
|---|---|
| Cocoa Butter | 4.4% |
| Butter Fat | 6.5% |
| Skim Milk Powder | 24% |
| Cocoa Powder | 6% |
| Sugar | 37.3% |
| Lecithin | 0.4% |

The fat composition in this recipe corresponds approximately to 4:1:1 cocoa butter equivalent; cocoa butter; butter fat.

The composition was milled through a Buhler triple roller mill and conched before tempering at 28°C. The tempering time was measured on a Grant temper meter after seeding with refiners paste and the viscosity of the tempering composition determined by Haake viscometer at 12 minutes, 25 and 32 minutes after temper. The tempered formulation was moulded into a bar which was cooled and demoulding time measured. Heat resistance was measured by finger printing 2 minutes after demoulding and finally, the bars were measured for hardness by penetrometer after storage of 20 and 25°C for one week.

The chocolate processing and storage characteristics of the experimental chocolate samples compared with a control sample (palm 65:shea 35) containing no sunflower oil are shown in Table II.

TABLE II

---------------------------------------------

| | Sample | | Control |
|---|---|---|---|
| | A | B | |
| ----------------------- | | | |
| Time to reach temper (min) | 46 | 46 | 46 |
| Time to demould (min) | 12 | 15 | 14 |
| Viscosity at temper (poise) | 268 | 200 | 242 |
| Penetration at 20C (0.1mm) | 33 | 32 | 29 |
| Penetration at 25C (0.1mm) | 51 | 65 | 48 |

---------------------------------------------

Example II

A similar total fat composition to that used in the above chocolate formulation and containing the same proportion of 20% butter fat, but using 80% cocoa butter only, was stabilised as above described for 40 hours at 26°C and was found to have a solids content at 20°C of approximately 35%. A replacement fat composition consisting of the palm fraction and shea stearin described in Example I and blended in the ratio of 1:2 was in turn blended with sunflower oil in an amount found to be 48% of the total mixture to give a similar solids content at 20°C.

A further chocolate formulation based on the resulting fat blend was made up as follows:-

6

| Fat Blend | 27.6% |
|---|---|
| Cocoa Butter | 4.8% |
| Cocoa Powder | 5.0% |
| Skim milk powder | 16.1% |
| Sugar | 46.2% |
| Lecithin | 0.3% |

This chocolate took only 12 minutes to temper at 30°C, compared with 50 to 60 minutes for a chocolate containing 20% butter fat and based on cocoa butter. It also exhibited penetration values of 33 units at 20°C and 47 and 25°C, comparable with the Control described in Example I.

The results of the above Examples indicated that tempering and demoulding times either remain unchanged or are significantly improved by the addition of sunflower oil and that the viscosity at temper is very similar, heat resistance directly after demoulding is slightly reduced by the presence of sunflower oil and that the sample containing 10% sunflower oil had acceptable penetrations at both 20 and 25°C, that containing 15% being somewhat softer at 25°C although the hardness at 20°C is quite acceptable.

EXAMPLE III

A similar formulation as described in Example I using the same principal ingredients, was prepared (sample A), together with a Control (sample B) according to the following recipes.

|  | A | B |
|---|---|---|
| POm (palm mid-fraction) | 7.45 | - |
| SHs (shea stearine) | 9.11 | - |
| SF (sunflower oil) | 11.04 | 11.04 |
| CB (cocoa butter) | 4.77 | 21.33 |
| 10/12 Cocoa powder | 5.04 | 5.04 |
| Skimmed milk powder | 16.09 | 16.09 |
| Sugar | 46.22 | 46.22 |
| Lecithin | 0.29 | 0.29 |

In both cases the total fat content was 32.37% and the total fat phases were:

| A | 23.0/28.1/14.8/34.1 | POm/SHs/CB/SF |
|---|---|---|
| B | 65.9/34.1 | CB/SF |

Both were tempered in a laboratory tempering vessel at 28°C by seeding. The tempering time was determined. The viscosity at various times after temper was also measured, bars were moulded and the time taken to demould in a stationary cooling tunnel at 10°C was also measured. After demoulding the hardness of the chocolate was determined by a fingerprint test 2 minutes after demoulding. The hardness of the chocolate on storage was measured by penetrometry of samples stored at 20C and 25C.

The results of these evaluations are shown below:

|  | A | B |
|---|---|---|
| Tempering time | 13 min | 21 min |
| Viscosity — temper+5 min | 325 poise | |
| — temper+10 min | 397 poise | |
| — temper+20 min | | 147 poise |
| — temper+24 min | | 173 poise |
| Demoulding Time | 14 min | 11 min |
| Fingerprinting | 6 ridges | 10 ridges |
| Penetrations — 1 wk/20C | 28 | 31 |
| 1 wk/25C | 36 | 42 |
| 4 wks/20C | 25 | 26 |
| 4 wks/25C | 29 | 27 |

Thus, the sample based on sunflower oil added to cocoa butter takes somewhat longer to temper than the sample containing POm and SHs although it has a much lower viscosity after temper and a slightly shorter demoulding time. From the time of demoulding up to about 1 month the sample containing only cocoa butter and sunflower oil is the softer. Fingerprinting 2 minutes after demoulding shows that it is extremely soft at this point and difficulty may be experienced in wrapping a product with such a fingerprint score. After 1 week's storage it is also softer than the corresponding sample according to the invention but this difference has disappeared after 1 month's storage at which point the hardnesses of the two samples are more or less identical.

The advantage of the sample according to the invention is therefore in tempering time and hardness in the first four weeks.

EXAMPLE IV

A chocolate 'base' was prepared by conventional refining including conching, according to the following recipe, parts by weight %

| Fat | 29.2 |
|---|---|
| Cocoa powder | 5.5 |
| Skimmed milk powder | 17.8 |
| Sugar | 47.0 |
| Lecithin | 0.5 |

The fat comprised a blend of cocoa butter with a conventional cocoa butter equivalent fat comprising a blend of palm oil mid-fraction and shea stearine fraction as described in Example I in equal amounts by weight.

Sunflower oil encapsulated by spray-drying an emulsion of the oil in an aqueous suspension of maltodextin and caseinate was added to the refined chocolate base, 10 parts to 90 parts of base.

The resulting formulation was first processed, then tempered and part deposited in moulds, the remainder being enrobed round confectionery centres. Both product types were satisfactory.

**Claims**

1. Fat composition, comprising a blend of palm mid-fraction and a hard butter, containing at least 50 wt% of POSt and/or StOSt (P = palmic acid, St = stearic acid, O = oleic acid), wherein the blend also comprises a proportion of a cocoa butter softening fat from which at least 40% of the total unsaturated fatty acid content is polyunsaturated fatty acid, whereas the ratio of palm mid-fraction : hard fat is 1:4 to 4:1, and the fat composition displays a solid fat content of at least 35 at 20°C and at most 8 at 35°C (NMR-Pulse method, stabilised).

2. Fat composition, according to claim 1, wherein the softening fat is encapsulated.

3. Fat composition, according to claim 2, wherein the softening fat is encapsulated in a protein and/or a sugar.

4. Fat composition, according to claims 2 and 3, wherein the encapsulated fat comprises a spray-dried aqueous emulsion.

5. Fat composition, according to claim 4, wherein the average particle size of the encapsulated fat is a maximum of 25 $\mu$m.

6. Fat composition, according to claims 2-5, wherein the softening fat also comprises butter fat or a fraction thereof.

7. Fat composition, according to claims 1-6, wherein the amount of softening fat as liquid triglyceride oil comprises 4-50 wt% of the fat composition.

8. Fat composition, according to claim 1, wherein the hard butter contains at leat 60 wt% StOSt and/or POSt.

9. Fat composition, according to claim 1, wherein the palm mid-fraction contains 60-80 wt% POP.

10. Process for the preparation of a chocolate composition, wherein a fat and the conventional chocolate ingredients are present, characterised by the incorporation of the encapsulated fat, according to claims 2-7 into a refined chocolate composition.

11. Process, according to claim 10, wherein the encapsulated fat also comprises butter fat.

12. Process, according to claim 11, wherein the encapsulated fat is encapsulated in milk powder.

**Revendications**

1. Composition de graisse, comprenant : un mélange de fraction médiane de palme et un beurre dur, contenant au moins 50 % en poids de POSt et/ou StOSt (P = acide palmitique, St = acide stéarique, O = acide oléique), dans laquelle le mélange comprend également une certaine quantité d'une graisse de ramollissement du beurre de cacao dont au moins 40 % de la teneur totale en acides gras insaturés sont constitués par des acides gras polyinsaturés, tandis que le rapport fraction médiane de palme:graisse dure est compris entre 1:4 et 4:1, et la composition de graisse présente une teneur en graisse solide d'au moins 35 à 20°C et d'au plus 8 à 35°C (procédé d'impulsions RMN, stabilisé).

2. Composition de graisse selon la revendication 1, dans laquelle la graisse de ramollissement est enrobée.

3. Composition de graisse selon la revendication 2, dans laquelle la graisse de ramollissement est enrobée dans une protéine et/ou un sucre.

4. Composition de graisse selon les revendications 2 et 3, dans laquelle la graisse enrobée comprend une émulsion aqueuse séchée par pulvérisation.

5. Composition de graisse selon la revendication 4, dans laquelle la granulométrie moyenne de la graisse enrobée ne dépasse pas 25 μm.

6.  Composition de graisse selon les revendications 2 à 5, dans laquelle la graisse de ramollissement comprend également de la graisse de beurre ou une fraction de celle-ci.

7.  Composition de graisse selon les revendications 1 à 6, dans laquelle la quantité de graisse de ramollissement (sous forme d'huile de triglycérides liquides) constitue de 4 à 50 % en poids de la composition de graisse.

8.  Composition de graisse selon la revendication 1, dans laquelle le beurre dur contient au moins 60 % en poids de StOSt et/ou POSt.

9.  Composition de graisse selon la revendication 1, dans laquelle la fraction médiane de palme contient de 60 à 80 % en poids de POP.

10. Procédé de préparation d'une composition de chocolat, dans laquelle sont présents une graisse et les ingrédients classiques de chocolat, caractérisé en ce qu'on incorpore une graisse enrobée selon les revendications 2 à 7 dans une composition raffinée de chocolat.

11. Procédé selon la revendication 10, dans lequel la graisse enrobée comprend également de la graisse de beurre.

12. Procédé selon la revendication 11, dans lequel la graisse enrobée est enrobée dans du lait en poudre.

**Patentansprüche**

1.  Fettzusammensetzung, umfassend ein Gemisch aus Palm-Mittelfraktion und einer Hartbutter, die mindestens 50 Gew.-% POSt und/oder StOSt (P = Palmitinsäure, St = Stearinsäure, O = Ölsäure) enthält, in der das Gemisch auch einen Anteil eines kakaobuttererweichenden Fettes umfaßt, bei dem mindestens 40 % des Gesamtgehaltes an ungesättigten Fettsäuren aus mehrfach ungesättigten Fettsäuren bestehen, während das Verhältnis von Palm-Mittelfraktion/Hartfett 1:4 bis 4:1 beträgt und die Fettzusammensetzung einen Festfettgehalt von mindestens 35 bei 20°C und höchstens 8 bei 35°C (NMR-Puls-Methode, stabilisiert) zeigt.

2.  Fettzusammensetzung gemäß Anspruch 1, in der das erweichende Fett eingekapselt ist.

3.  Fettzusammensetzung gemäß Anspruch 2, in der das erweichende Fett in einem Protein und/oder einem Zucker eingekapselt ist.

4.  Fettzusammensetzung gemäß den Ansprüchen 2 und 3, in der das eingekapselte Fett eine sprühgetrocknete wäßrige Emulsion umfaßt.

5.  Fettzusammensetzung gemäß Anspruch 4, in der die durchschnittliche Teilchengröße des eingekapselten Fettes maximal 25 μm beträgt.

6.  Fettzusammensetzung gemäß den Ansprüchen 2 bis 5, in der das erweichende Fett ferner Butterfett oder eine Fraktion desselben umfaßt.

7.  Fettzusammensetzung gemäß den Ansprüchen 1 bis 6, in der die Menge des erweichenden Fettes als flüssiges Triglyceridöl 4 bis 50 Gew.-% der Fettzusammensetzung umfaßt.

8.  Fettzusammensetzung gemäß Anspruch 1, in der die Hartbutter mindestens 60 Gew.-% StOSt und/oder POSt enthält.

9.  Fettzusammensetzung gemäß Anspruch 1, in der die Palm-Mittelfraktion 60 bis 80 Gew.-% POP enthält.

10. Verfahren zur Herstellung einer Schokoladenzusammensetzung, in der ein Fett und die üblichen Schokoladenbestandteile vorliegen, gekennzeichnet durch die Einverleibung des eingekapselten Fettes gemäß den Ansprüchen 2 bis 7 in eine raffinierte Schokoladenzusammensetzung.

11. Verfahren gemäß Anspruch 10. bei dem das eingekapselte Fett auch Butterfett umfaßt.

12. Verfahren gemäß Anspruch 11, bei dem das eingekapselte Fett in Milchpulver eingekapselt ist.